Europäisches Patentamt

European Patent Office

Office européen des brevets

(11) Publication number: **0 349 691**
**A1**

## EUROPEAN PATENT APPLICATION

(21) Application number: 88308634.0

(51) Int. Cl.⁴: **F16D 61/00**

(22) Date of filing: 19.09.88

(30) Priority: 02.07.88 JP 165482/88

(43) Date of publication of application:
10.01.90 Bulletin 90/02

(84) Designated Contracting States:
AT BE CH DE ES FR GB GR IT LI LU NL SE

(71) Applicant: Takayama, Masaru
No. 4-43, Kamishinozaki-cho Edogawa-ku
Tokyo(JP)

(72) Inventor: Takayama, Masaru
No. 4-43, Kamishinozaki-cho Edogawa-ku
Tokyo(JP)

(74) Representative: Carmichael, David Andrew
Halliday et al
G.F. REDFERN & CO. High Holborn House
52/54 High Holborn
London WC1V 6RL(GB)

(54) Inertial running energy storage device for vehicle.

(57) An inertial energy storage device for vehicles in
which heretofore completely diregarded inertial en-
ergy available when the brakes are applied can be
utilized for various useful purposes such as assisting
the raising the stand (10) of a motorcycle or the
starting of the engine of an automotive vehicle.

*FIG.1*

Xerox Copy Centre

## Inertial Running Energy Storage Device for Vehicles

The present invention relates to an inertial running energy storage device of the type for storing the inertial energy available from the time when a ground vehicle such as a motorcycle, an automotive vehicle, an electric car or the like is applied with brake until it is stopped so that the stored inertial energy can be used for suitable purposes.

So far inertial running energy available from the time when a moving ground vehicle is applied with brake until the time it is stopped has not been taken into consideration and is dissipated for nothing.

In view of the above, the present invention was made to utilize the inertial running energy available when a moving ground vehicle is applied with brake which has not been used heretofore as described above so that the stored inertial energy is used, for instance, in case of returning a motorcycle to its running position or used as an auxiliary force for starting the engine of an automotive vehicle.

To this end, according to the present invention, part of the inertial running energy available from the time when brakes are applied to the wheels of a running ground vehicle until the time when it runs a certain distance and is stopped, is derived and stored so that the stored inertial energy can be utilized for various purposes. The primary object of the present invention is therefore to provide a device capable of storing the inertial running energy available from a ground vehicle when brakes are applied.

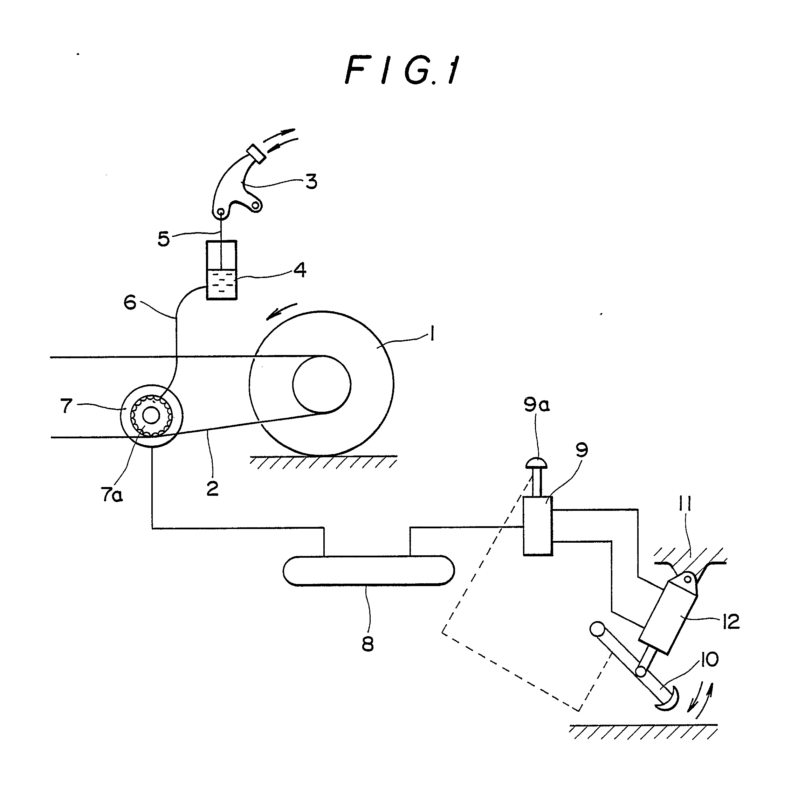

The above and other objects, effects, features and advantages of the present invention will become more apparent from the following description of a preferred embodiment thereof taken in conjunction with the accompanying drawing.

A single figure is a schematic view illustrating the operation system of a preferred embodiment of an inertial energy storage device in accordance with the present invention.

The present invention will be explained in detail hereinunder.

The single figure is a schematic view illustrating the operating system of an inertial energy storage device in accordance with the present invention applied to a motorcycle. Reference numeral 1 designates a wheel of the motorcycle which is rotated by a chain 2 connected to a gear of an engine (not shown). In this embodiment, the chain 2 always moves in synchronisms with the rotation of the wheel 1 and an idling mechanism is not interposed between the wheel 1 and the chain 2, but is interposed between the engine (not shown) and the chain 2.

Reference numeral 3 denotes a brake pedal which not only has its essential function of applying brakes but also is connected to a piston rod 5 of a cylinder 4 which in turn is connected through a pipe 6 to a clutch portion 7a of a compressor 7.

When the brake pedal 3 is depressed, therefore, it accomplishes its essential function of applying brakes and simultaneously activates the cylinder 4 so that the clutch portion 7a interconnects between the chain 2 and the compressor 7 and consequently the air is charged into and stored in an air tank 8.

That is, simultaneous with the depression of the brake pedal 3, the compressor 7 is activated so that the compressed air is filled into the air tank 8.

Reference numeral 9 indicates a directional control valve or a selector which is communicated not only with the air tank 8 but also with a cylinder 12 interposed between a stand 10 and a main body 11. At the initial stage of raising the stand 10, the compressed air is charged into the cylinder 12, thereby assisting the raising of the stand 10. Furthermore, according to the present invention, at the initial stage of lowering the stand 10, the cylinder 12 operates in a manner opposite to that described above.

In the case of the inertial energy storage device with the above-described construction, when brakes are applied in order to control the speed of the motorcycle which is running, not only braking forces are applied to the wheels of the motorcycle but also the cylinder 4 is activated simultaneously so that the compressor 7 is also activated through the clutch portion 7a. As a result, the compressed air is charged into and stored in the air tank. When the brake pedal is released, the cylinder 4 is returned to its initial state so that the above-described operation is stopped.

When the brakes are applied, the compressed air is always charged into and stored in the air tank 8 as described above. Of course, the air tank 8 is equipped with a relief valve so that when the pressure of the compressed air stored in the air tank 8 becomes in excess of a predetermined pressure, the compressed air is automatically discharged out of the air tank 8.

Thus, at the initial stage of raising the stand 10 of the motorcycle which is stopped, the actuating rod 9a of the directional control valve 9 is pushed down so that the compressed air flows into the cylinder 12. As a result, the piston rod of the cylinder 12 is extended out of the cylinder 12 to assist the raising the stand 10.

That is, the released compressed air assists to raise the stand 10 at the moment when the greatest force is required to do so.

Furthermore, when the stand 10 thus raised is inclined so that the motorcycle becomes ready to run, the driver must temporarily raise the main body. In this case, considerably greater force is required, but according to the present invention, the selector valve 9 is further pushed from its neutral position so that the cylinder 12 is reversed, thereby adding auxiliary force.

So far the present invention has been described in conjunction with the motorcycle, but it is of course to be understood that the present invention may be equally applied to other ground vehicles such as automotive vehicles and the like so that inertial running energy available when the brakes are applied is stored in order to utilize the stored inertial energy for various auxiliary purposes.

As described above, according to the present invention, prt of the inertial energy available when the brakes are applied but has not been utilized at all and wasted for nothing so far is derived and stored so that the recovered and stored inertial energy can be now utilized as auxiliary forces in cases of various operations and especially in case of an operation requiring human power. Furthermore, the inertial energy storage device in accordance with the present invention enhances the braking action when the brakes are applied. Thus the inertial energy storage device in accordance with the present invention serves a double purpose or attains the effect of killing two birds with one stone and therefore greatly contributes to the industry.

While there has been described what are at present considered to be a preferred embodiment of the present invention, it will be understood that various modifications may be made thereto, and it is intended that the appended claims cover all such modifications as all within the true spirit and scope of the presnet invention.

## Claims

1. A inertial running energy storage device for vehicles, in which part of inertial energy which is available when braking forces are applied to the wheels of said vehicle and which still permits said vehicle to run a certain distance, is derived and stored in order to utilized the inertial energy thus stored can be utilized for other various purposes.

2. An inertial running energy storage device as set forth in Claim 1, wherein a compressor which is permitted to operatively coupled to the rotation of wheels only when the brakes are applied is provided so that the compressed air produced by said compressor is charged into and stored in an air tank.

3. An inertial running energy storage device for motorcycles as set forth in Claim 2, wherein said air tank is communicated through a directional control valve with an air cylinder which is interposed between a main body and a stand in order to assist the raising of said main body to its running position.

# F I G. 1

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 88308634.0 |
| X | FR - A1 - 2 125 455 <br> (MAURER) <br> * Claims 1-3 * <br> -- | 1,2 | F 16 D 61/00 |
| X | WO - A1 - 87/06 902 <br> (MPG KONSULT AB) <br> * Abstract * <br> -- | 1 | |
| A | FR - A1 - 2 323 067 <br> (CARMAN) <br> * Claims 1-4 * <br> -- | 1 | |
| A | FR - A1 - 2 332 460 <br> (REGIE NATIONALE DES USINES RENAULT) <br> * Claims 1-10 * <br> ---- | 1,2 | |
| | | | TECHNICAL FIELDS SEARCHED (Int. Cl.4) |
| | | | F 16 D 61/00 <br> B 62 M 1/00 |

The present search report has been drawn up for all claims

| Place of search | Date of completion of the search | Examiner |
|---|---|---|
| VIENNA | 15-09-1989 | KAMMERER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82